# EUROPEAN PATENT APPLICATION

(11) **EP 4 080 712 A1**
(43) Date of publication of application: **26.10.2022**
(21) Application number: 20905679.5
(22) Date of filing: 21.12.2020
(51) Int. Cl.: H02J 7/00

(54) **ELECTRONIC DEVICE**

(30) Priority: 24.12.2019 CN 201911349368
(71) Applicant: GUANGDONG OPPO MOBILE TELECOMMUNICATIONS CORP., LTD., Dongguan, Guangdong 523860 (CN)
(72) Inventor: QU, Chunying, Dongguan, Guangdong 523860 (CN)
(74) Representative: Thorniley, Peter
(86) International application number: PCT/CN2020/138040
(87) International publication number: WO 2021/129574

(57) **Abstract**

The present disclosure provides an electronic device. The electronic device includes a battery (240), a plurality of wireless charging units configured to charge the battery (240), each of the plurality of wireless charging units including a wireless receiving circuit (210); a plurality of wired charging units configured to charge the battery based on an output voltage and an output current of a power supply device (220); and a control unit configured to control at least one of the plurality of wireless charging units and/or at least one of the plurality of wired charging units to charge the battery (240).

## Description

### CROSS-REFERENCE TO RELATED APPLICATION

The present application claims priority to Chinese Patent Application No. 201911349368.8 filed on December 24, 2019 with China National Intellectual Property Administration, which is hereby incorporated by reference in its entirety.

### TECHNICAL FIELD

The present disclosure relates to the field of charging, and more particularly, to an electronic device.

### BACKGROUND

At present, more and more electronic devices can support both wired and wireless charging.

As users have higher and higher requirements for the charging speed of electronic devices, the speed of wired charging and wireless charging can no longer meet the requirements of the users. Therefore, how to further improve the charging speed of electronic devices has become an urgent problem to be solved.

### SUMMARY

The present disclosure provides an electronic device, which can provide a higher wired charging speed and a higher wireless charging speed for the electronic device.

In an aspect, an electronic device is provided. The electronic device includes a battery, a plurality of wireless charging units, a plurality of wired charging units, and a control unit. The plurality of wireless charging units is configured to charge the battery, and each of the plurality of wireless charging units includes a wireless receiving circuit. The plurality of wired charging units is configured to charge the battery based on an output voltage and an output current of a power supply device. The control unit is configured to control at least one of the plurality of wireless charging units and/or at least one of the plurality of wired charging units to charge the battery.

Based on the above technical solution, the electronic device may include a plurality of wireless charging units and a plurality of wired charging units, which can improve the charging power received by the battery and thus improve the charging speed, compared with one wireless charging unit and one wired charging unit.

### BRIEF DESCRIPTION OF DRAWINGS

FIG. 1 is a schematic diagram of a wireless charging system according to embodiments of the present disclosure.
FIG. 2 is a schematic diagram of an electronic device supporting wired charging and wireless charging according to embodiments of the present disclosure.
FIG. 3 is a schematic diagram of an electronic device according to embodiments of the present disclosure.
FIG. 4 is a schematic diagram of a wireless charging structure according to embodiments of the present disclosure.
FIG. 5 is a schematic diagram of another electronic device according to embodiments of the present disclosure.
FIG. 6 is a schematic diagram of another electronic device according to embodiments of the present disclosure.
FIG. 7 is a schematic diagram of another electronic device according to embodiments of the present disclosure.

### DESCRIPTION OF EMBODIMENTS

The technical solutions in the embodiments of the present disclosure will be clearly and completely described below with reference to the accompanying figures. Apparently, the described embodiments are part but not all of the embodiments. Based on the embodiments in the present disclosure, all other embodiments obtained by those of ordinary skill in the art without creative work shall fall within the protection scope of the present disclosure.

The electronic device used in the embodiments of this disclosure may refer to a terminal, and the "terminal" may include, but is not limited to, a device configured to receive/transmit communication signals via a wired line connection (for example, via a Public Switched Telephone Network (PSTN), a Digital Subscriber Line (DSL), a digital cable, a direct cable connection, and/or another data connection/network) and/or via a wireless interface (e.g., for a cellular network, a Wireless Local Area Network (WLAN), Digital TV networks such as a Digital Video Broadcasting Handheld (DVB-H) network, a satellite network, an Amplitude Modulation-Frequency Modulation (AM-FM) broadcast transmitter, and/or another communication terminal). A terminal configured to communicate via a wireless interface may be referred to as a "wireless communication terminal", a "wireless terminal" and/or a "mobile terminal".

Examples of the electronic device include, but are not limited to, a satellite or cellular telephone, a Personal Communication System (PCS) terminal that may combine a cellular radio telephone with data processing, facsimile, and data communication capabilities; a Personal Digital Assistant (PDA) that may include a radio telephone, a pager, an Internet/Intranet access, a web browser, a memo pad, a calendar, and/or a Global Positioning System (GPS) receiver; and a conventional laptop and/or palmtop receiver or other electronic devices including a radiotelephone transceiver. In some embodiments, the electronic device may refer to a mobile terminal device or a handheld terminal device, such as a mobile phone, a pad, and the like. In some embodiments, the electronic device mentioned in the embodiments of the present disclosure may refer to a chip system, and a battery of the electronic device may or may not belong to the chip system in this embodiment.

In addition, the electronic device can further include other electronic devices that require charging, such as mobile phones, mobile power sources (such as portable power banks, travel chargers, etc.), electric vehicles, notebook computers, unmanned drones, tablet computers, e-books, electronic cigarettes, intelligent electronic devices, small electronic products, and the like. The intelligent electronic devices may include, for example, watches, wristbands, intelligent glasses, cleaning robots, and the like. The small electronic products may include, for example, wireless earphones, Bluetooth speakers, electric toothbrushes, and rechargeable wireless mice, and the like.

In order to understand the solutions of the present disclosure more clearly, the working principle of wireless charging will be briefly introduced below. However, it should be understood that the content introduced below is only for a better understanding of the present disclosure, and should not be construed as specifically limiting the present disclosure.

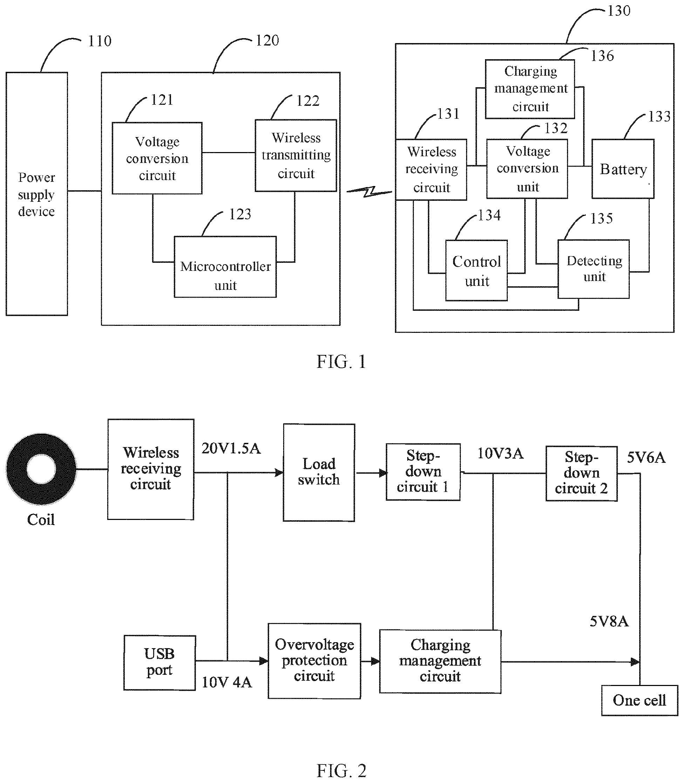

FIG. 1 shows a wireless charging system according to embodiments of the present disclosure. A wireless charging method is briefly introduced below with reference to FIG. 1.

As shown in FIG. 1, a wireless charging system may include a power supply device 110, a wireless transmitting device 120, and an electronic device 130. The wireless transmitting device 120 may be, for example, a wireless charging base. The electronic device 130 may be, for example, a terminal.

After the power supply device 110 is connected to the wireless transmitting device 120, an output voltage and output current of the power supply device 110 are transmitted to the wireless transmitting device 120. The wireless transmitting device 120 may convert, through an internal wireless transmitting circuit 122, the output voltage and output current of the power supply device 110 into wireless charging signals (e.g., electromagnetic signals) for transmission. For example, the wireless transmitting circuit 122 can convert the output current of the power supply device 110 into an alternating current, and then convert the alternating current into a wireless charging signal through a transmitting coil or a transmitting antenna (not shown in the figure). A third voltage conversion circuit can convert the output voltage of the power supply device 110, and a microcontroller unit 123 can control the voltages of the third voltage conversion circuit 121 and the wireless transmitting circuit 122.

This disclosure does not specifically limit the type of the power supply device. For example, the power supply device can be an adapter, a power bank, a car charger, a computer or other devices.

The electronic device 130 can receive, through a wireless receiving circuit 131, the wireless charging signal transmitted by the wireless transmitting circuit 122, and convert the wireless charging signal into an output voltage and an output current of the wireless receiving circuit 131.

For example, the wireless receiving circuit 131 can convert, through a receiving coil or a receiving antenna (not shown in the figure), an electromagnetic signal transmitted by the wireless transmitting circuit 122 into an alternating current, and perform operations such as rectification and/or filtering on the alternating current to convert the alternating current into the output voltage and output current of the wireless receiving circuit 131. The output voltage and output current received by the wireless receiving circuit 131 are adjusted by a voltage conversion unit 132 or a charging management circuit 136, to obtain a charging voltage and/or charging current expected by a battery 133 in the electronic device 130, so as to realize charging for the battery 133.

The above-mentioned charging management circuit 136 may be, for example, a charging integrated circuit (IC).

A detecting unit 135 in the embodiments of the present disclosure can detect information of the battery 133, such as a battery temperature, a battery voltage and a battery current, etc. The detecting unit 135 can also detect an output current and an output voltage of the voltage conversion unit 132 or the charging management circuit 136, and can detect the output voltage and output current of the wireless receiving circuit 131, etc.

The electronic device provided by the embodiments of the present disclosure can support wireless charging as well as wired charging. FIG. 2 shows a schematic structural diagram of an electronic device that supports both wireless charging and wired charging.

As shown in FIG. 2, the electronic device may include one wireless charging unit. The one wireless charging unit includes one receiving coil and one wireless receiving circuit. The receiving coil can be configured to receive the wireless charging signal transmitted by the transmitting coil, and the wireless receiving circuit can be configured to convert the wireless charging signal received by the receiving coil into the charging voltage and charging current. A load switch can be configured to realize overvoltage protection to prevent the output voltage of the wireless receiving circuit from being too large and damaging the subsequent circuits. A step-down circuit 1 can be configured to step down the output voltage of the wireless receiving circuit. A step-down circuit 2 can be configured to step down an output voltage of the step-down circuit 1, and the stepped-down voltage by the step-down circuit 2 can be used to charge the battery. For a battery including one cell, the stepped-down voltage by the step-down circuit 2 is about 5 V, which can match the charging requirement of the battery.

A maximum output voltage and an output current of the wireless receiving circuit are 20V and 2A, which become 10V and 4A after being stepped down by the step-down circuit 1, and becomes 5V and 8A after being stepped down by the step-down circuit 2. Therefore, limited by the maximum output voltage and the output current of the wireless receiving circuit, the electronic device shown in FIG. 2 can only realize a maximum wireless charging power of 40W.

The electronic device shown in FIG. 2 can also include a wired charging unit. In order to avoid serious heat generation, a maximum output voltage and a current received from a universal serial bus (USB) port are 10V and 4A, which enters the charging management circuit after passing through an overvoltage protection circuit, and then enters the battery after becoming 5V and 8A through the step-down circuit 2. Therefore, limited by the maximum output voltage and the output current of the USB port, the electronic device shown in FIG. 2 can only realize a maximum wired charging power of 40W.

The above-mentioned maximum wireless charging power and maximum wired charging power can no longer meet the charging requirement of users, so it is necessary to seek a faster wireless charging method and a wired charging method.

The embodiments of the present disclosure provide an electronic device, which can provide a higher wireless charging speed and a higher wired charging speed.

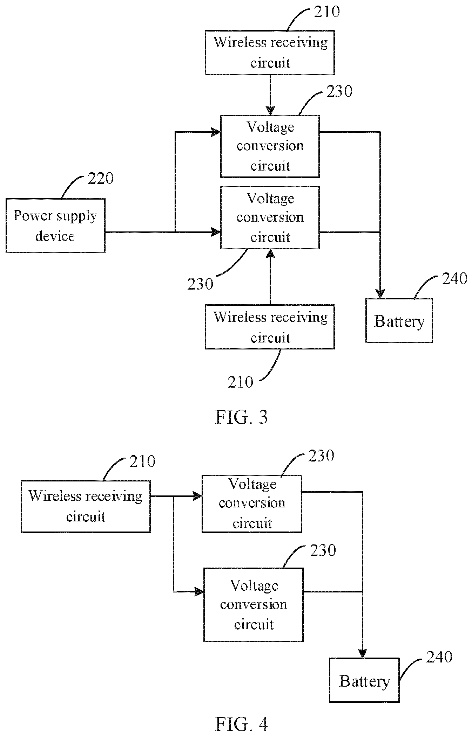

As shown in FIG. 3, the electronic device may include a battery 240, a plurality of wireless charging units, and a plurality of wired charging units. The plurality of wireless charging units is configured to charge the battery 240, and each of the plurality of wireless charging units includes a wireless receiving circuit, that is, different wireless charging units include different wireless receiving circuits 210. The plurality of wired charging units can be configured to charge the battery 240 according to an output voltage and an output current of a power supply device 220.

In addition, the electronic device may further include a control unit. The control unit is configured to control at least one of the plurality of wireless charging units and/or at least one of the plurality of wired charging units to charge the battery.

The structure of the control unit is not limited specifically in the embodiments of the present disclosure. For example, the control unit may be an application processor (AP), or chips or units that can perform control functions such as a charge IC, a microcontroller unit (MCU) and the like.

It can be understood that the power supply device 220 can transmit the charging current and the charging voltage through a charging interface (such as a USB port) to charge the battery.

By setting the plurality of wireless charging units and the plurality of wired charging units, the embodiments of the present disclosure can improve the charging speed, compared with the case with one wireless charging unit and one wired charging unit shown in FIG. 2. Assuming that the electronic device includes m wireless charging units, m is an integer greater than 1, and a maximum charging power of each of the m wireless charging units for charging the battery is 40W, then a maximum charging power that the m wireless charging units can provide for the battery is m^{∗} 40W, a charging speed of which is m times the charging speed of the electronic device shown in FIG. 2. Assuming that the electronic device includes n wired charging units, n is an integer greater than 1, and a maximum charging power of each of the m wireless charging units for charging the battery is 40W, then a maximum charging power that the m wired charging units can provide for the battery is n^{∗} 40W, a charging speed of which is n times the charging speed of the electronic device shown in FIG. 2

It can be understood that the wireless charging unit may include a receiving coil, a wireless receiving circuit, and a step-down circuit, and the wired charging unit may include a step-down circuit.

Usually, in order to reduce the heat generation of the coil, a high voltage and a small current are used to transmit the wireless charging signal. Therefore, the output voltage of the wireless receiving circuit is usually high and cannot be directly used to charge the battery. In the embodiments of the present disclosure, each of the plurality of wireless charging units may include a first voltage conversion circuit. An output end of one wireless receiving circuit may be connected to an input end of at least one first voltage conversion circuit, the at least one first voltage conversion circuit is configured to perform voltage conversion on an output voltage and output current of the one wireless receiving circuit, and the converted voltage and current are used for charging the battery.

When an output end of one wireless receiving circuit is connected to input ends of multiple first voltage conversion circuits, the multiple first voltage conversion circuits may be connected in series or in parallel. The first voltage conversion circuits connected in parallel can reduce the heat generated during the conversion process.

An output end of one wireless receiving circuit can be connected to an input end of one first voltage conversion circuit, and an output end of the one first voltage conversion circuit can be connected to the battery. That is, one first voltage conversion circuit is used to perform voltage conversion on an output voltage and an output current of one wireless receiving circuit, and the converted voltage and current by the first voltage conversion circuit can be used to charge the battery.

Of course, an output end of one wireless receiving circuit can be connected to input ends of multiple first voltage conversion circuits respectively, and the battery is connected to output ends of the multiple first voltage conversion circuits respectively. That is, the multiple first voltage conversion circuits are connected in parallel to jointly convert the output voltage of the one wireless receiving circuit, and the stepped-down voltage can be used to charge the battery. For example, as shown in FIG. 4, an output end of one wireless receiving circuit can be connected to input ends of two voltage conversion circuits 230, and the two voltage conversion circuits 230 jointly convert the output voltage of the one wireless receiving circuit 210, so as to reduce the heat generation on each of the two voltage conversion circuits 230.

In the embodiments of the present disclosure, the plurality of wireless charging units may further include a plurality of receiving coils, and each of the plurality of receiving coils may correspond to one wireless receiving circuit, that is, one receiving coil is connected to an input end of one wireless receiving circuit. The receiving coil can be configured to receive an electromagnetic signal transmitted by the transmitting coil, and convert the electromagnetic signal into a voltage and a current to be inputted to the wireless receiving circuit. The wireless receiving circuit can rectify and/or filter the voltage and the current to obtain an output voltage and an output current of the wireless receiving circuit, then the output voltage and output current are subjected to voltage conversion by the first voltage conversion circuit, and the converted voltage and current are used to charge the battery.

The first voltage conversion circuit in the embodiments of the present disclosure may have a step-up or step-down function as required. If the output voltage of the wireless receiving circuit is greater than a charging voltage required by the battery, the first voltage conversion circuit can be a step-down circuit. If the output voltage of the wireless receiving circuit is lower than the charging voltage required by the battery, the first voltage conversion circuit can be a step-up circuit.

Assuming that the first voltage conversion circuit is a step-down circuit, the first voltage conversion circuit may be a buck circuit or a buck charge pump; and assuming that the first voltage conversion circuit is a step-up circuit, the first voltage conversion circuit may be a boost circuit or a boost charge pump, which is not specifically limited in the embodiments of the present disclosure.

The charge pump has a fixed conversion ratio. The conversion ratio can refer to a ratio between the output voltage and the input voltage of the voltage conversion circuit. The charge pump is mainly composed of switch devices. The current flowing through the switch devices generates very little heat, which is almost equivalent to the current flowing directly through a wire. The heat generation can be reduced by using the charge pump as the voltage conversion circuit. Therefore, the first voltage conversion circuit in the embodiments of the present disclosure can adopt the charge pump to reduce the heat generation.

It can be understood that, the conversion ratio in the embodiments of the present disclosure may refer to a step-up ratio or a step-down ratio.

Since the voltage provided by the power supply device is relatively high, it cannot be directly used for charging the battery. Therefore, in the embodiments of the present disclosure, each of the plurality of wired charging units may have a second voltage conversion circuit. The second voltage conversion circuit is configured to perform voltage conversion on the output voltage and the output current of the power supply device to obtain a converted voltage and a converted current to be used for charging the battery.

The second voltage conversion circuit is similar to the first voltage conversion circuit. For the description of the second voltage conversion circuit, reference is made to the above description.

Assuming that the battery includes N cells connected in series, a voltage ratio of an output voltage of each first voltage conversion circuit to an input voltage of the first voltage conversion circuit is 1:N, and a voltage ratio of an output voltage of each second voltage conversion circuit to an input voltage of the second voltage conversion circuit is 1:N. Alternatively, the embodiments of the present disclosure may be implemented by using a plurality of conversion circuits with a conversion ratio of 1:2 connected in series. Here, N is an integer greater than or equal to 2.

For example, if the battery includes two cells connected in series, the conversion ratio of each first voltage conversion circuit may be 1:2, and the conversion ratio of each second voltage conversion circuit may be 1:2. For another example, if the battery includes four cells connected in series, the conversion ratio of each first voltage conversion circuit may be 1:2. In this embodiment of the present disclosure, two first voltage conversion circuits connected in series may be used to convert the output voltage and output current of the wireless receiving circuit.

In the embodiments of the present disclosure, the battery may include one cell, or a plurality of cells connected in series.

Assuming that the battery includes two cells, the charging voltage required by the battery is about 10V, and the first voltage conversion circuit only needs to convert the voltage to about 10V. Assuming that the output of the wireless receiving circuit is 20V and 2A, the first voltage conversion circuit can be a step-down circuit, and a step-down ratio of the step-down circuit can be 1:2, that is, the first voltage conversion circuit can be configured to convert an input of 20V and 2A to an output of 10V and 4A to charge the battery.

Assuming that the battery includes one cell, the charging voltage required by the battery is about 5V, and the first voltage conversion circuit needs to convert the voltage to about 5V Assuming that the output of the wireless receiving circuit is still 20V and 2A, the first voltage conversion circuit can be a step-down circuit, and a step-down ratio of the step-down circuit can be 1:4, that is, the first voltage conversion circuit can be configured to convert the input of 20V and 2A to an output of 5V and 8A to charge the battery.

Of course, in the case that the battery includes only one cell, the embodiments of the present disclosure may use two first voltage conversion circuits connected in series to perform voltage conversion on the output voltage and the output current of the wireless receiving circuit. For example, the two first voltage conversion circuits are a first voltage conversion circuit **a** and a first voltage conversion circuit **b,** and the first voltage conversion circuit **a** and the first voltage conversion circuit **b** are connected in series, and the conversion ratios of the first voltage conversion circuit **a** and the first voltage conversion circuit **b** are both 1:2. The first voltage conversion circuit **a** can be configured to convert an output of 20V and 2A of the wireless receiving circuit into an output voltage and output current of 10V and 4A. The first voltage conversion circuit **b** can be configured to convert the output voltage and output current of 10V and 4A to an output voltage and output current of 5V and 8A to charge to battery.

The above only describes the first voltage conversion circuit as an example, and the above description is also applicable to the second voltage conversion circuit.

In the embodiments of the present disclosure, the first voltage conversion circuit may double as the second voltage conversion circuit, or the first voltage conversion circuit and the second voltage conversion circuit may be different circuits.

If the first voltage conversion circuit and the second voltage conversion circuit are different circuits, it means that the wireless charging unit and the wired charging unit each use an independent voltage conversion circuit for voltage conversion. In this case, the conversion ratio of the first voltage conversion circuit may be the same as or different from the conversion ratio of the second voltage conversion circuit.

If the first voltage conversion circuit and the second voltage conversion circuit are one and the same circuit, it means that the wired charging unit and the wireless charging unit share the same voltage conversion circuit. That is, the voltage conversion circuit can perform voltage conversion on the output voltage of the wireless receiving circuit during the wireless charging process, and can also perform voltage conversion on the output voltage of the power supply device during the wired charging process. By multiplexing the voltage conversion circuit, the voltage conversion circuit realizes the voltage conversion function during different charging processes, which can save space, improve the integration degree of the chip, and reduce the volume of the electronic device.

As shown in FIG. 3, a voltage conversion circuit 230 may be the first voltage conversion circuit and the second voltage conversion circuit. During the wireless charging process, the voltage conversion circuit 230 can be used to receive the output voltage and output current of the wireless receiving circuit 210, and perform conversion on the output voltage and output current of the wireless receiving circuit 210. During the wired charging process, the voltage conversion circuit 230 can be used to receive the output voltage and output current of the power supply device 220, and perform conversion on the output voltage and output current of the power supply device 220.

It should be noted that the plurality of wired charging units and the plurality of wireless charging units described above are all fast-charging units. During the wireless charging process, the wireless charging signal transmitted by the transmitting coil can be adjusted according to the charging requirement of the battery so that the adjusted wireless charging signal can match the charging requirement of the battery, and the first voltage conversion circuit only needs to perform conversion according to a fixed conversion ratio to charge the battery. During the wired charging process, the output voltage and output current of the power supply device can be adjusted according to the charging requirement of the battery so that the adjusted voltage and current can match the charging requirement of the battery, and the second voltage conversion circuit only needs to perform conversion according to a fixed conversion ratio to charge the battery.

In addition to the channels of fast charging, the electronic device in the embodiments of the present disclosure may further include an ordinary charging unit. The ordinary charging unit can be applied in an ordinary power supply device. The ordinary power supply device refers to a power supply device with an output voltage and an output current that cannot be adjusted.

For example, the electronic device includes a charging management circuit, and the charging management circuit can be configured to adjust the output voltage and the output current of the power supply device in such a manner that the adjusted voltage and the adjusted current match the charging requirement of the battery.

The charging management circuit can be, for example, a buck or boost circuit, which does not have a fixed conversion ratio. Since the output voltage and output current of the power supply device are fixed, the charging management circuit can adjust the conversion ratio to make its output voltage and output current match the charging requirement of the battery.

If the battery includes a plurality of cells, the electronic device may further include a third voltage conversion circuit. The third voltage conversion circuit has one end connected to the battery and another end connected to a power consumption system of the electronic device. The third voltage conversion circuit is configured to convert the output voltage of the battery to supply power to the power consumption system of the electronic device during the power supply process.

Since an output voltage of the plurality of cells is relatively high and is not suitable to supply power to the power consumption system directly, the output voltage of the battery can be converted into a voltage required by the power consumption system through the third voltage conversion circuit.

Optionally, a conversion ratio of the third voltage conversion circuit is related to the number of cells included in the battery.

If the battery includes two cells, the output voltage of the battery is about 10V, and an input voltage required by the power consumption system is 5V Therefore, during the power supply process, the conversion ratio of the third voltage conversion circuit can be 1: 2, and the output voltage of the battery can be converted to 5V to supply power to the power consumption system. If the battery includes three cells, the conversion ratio of the third voltage conversion circuit can be 1:3 during the power supply process. If the battery includes M cells, and M is a positive integer, the conversion ratio of the third voltage conversion circuit may be 1:M during the power supply process.

The third voltage conversion circuit can be a bidirectional conversion circuit, and one end of the third voltage conversion circuit can also be connected to an output end of the charging management circuit. During the charging process, the third voltage conversion circuit can convert an output voltage and an output current of the charging management circuit, so that the converted voltage and current can match the charging requirement of the battery. The use of a bidirectional charge pump can reduce the required devices and circuits, which helps to improve the integration level of the chip and reduce the volume.

At present, most charging management circuits are designed for a single cell, and an output voltage thereof matches the charging requirement of the single cell, which is about 5V If the battery is changed from a single cell to a plurality of cells, the existing charging management circuit cannot meet the charging requirement of the battery. In the embodiments of the present disclosure, the third voltage conversion circuit can be connected to the output end of the charging management circuit to step up the output voltage and output current of the charging management circuit, so that the stepped-up voltage and current can meet the charging requirement of the battery.

Of course, if the output voltage and output current of the charging management circuit can match the voltage required by the plurality of cells, the plurality of cells can be directly charged without using the third voltage conversion circuit to step up the voltage during the charging process.

The conversion ratio of the third voltage conversion circuit is related to the number of cells included in the battery, and the conversion ratio may refer to a ratio between an output voltage and an input voltage of the third voltage conversion circuit. When the battery includes M cells, where M is a positive integer, and assuming that the output voltage of the charging management circuit is 5V, then the conversion ratio of the third voltage conversion circuit can be M:1 during the charging process. For example, when the battery includes two cells, the conversion ratio of the third voltage conversion circuit can be 2:1 during the charging process. When the battery includes three cells, the conversion ratio of the third voltage conversion circuit can be 2:1 during the charging process.

Optionally, the third voltage conversion circuit can be a bidirectional charge pump, and the bidirectional charge pump can be used as a step-up circuit during the charging process, and as a step-down circuit during the power supply process.

Of course, in the embodiments of the present disclosure, two different third voltage conversion circuits may be used for voltage conversion during the power supply process and the charging process. One of the two different third voltage conversion circuits is configured for voltage conversion during the power supply process, and the other of the two different third voltage conversion circuits is configured for voltage conversion during the charging process, which is not specifically limited in the embodiments of the present disclosure.

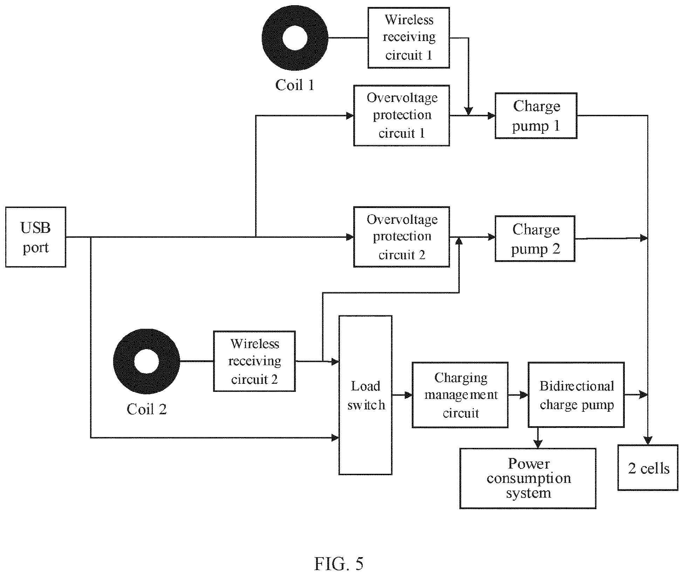

Optionally, as shown in FIG. 5, the electronic device may further include a charging interface and a load switch. The load switch can be used for circuit protection during the charging process. The load switch can have one end connected to the charging interface and another end connected to the second voltage conversion circuit. The charging interface can be configured to receive the output voltage and the output current of the power supply device. The load switch can be configured to adjust the output voltage of the power supply device in such a manner that the adjusted voltage does not exceed a predetermined voltage, thereby protecting a subsequent circuit from being damaged due to an excessively high voltage received.

Of course, the load switch can also perform voltage protection during the wireless charging process. For example, as shown in FIG. 5, one end of the load switch is connected to an output end of the wireless receiving circuit to adjust the output voltage and output current of the wireless receiving circuit in such a manner that the adjusted voltage does not exceed a predetermined voltage.

The load switch, due to its high integration level, can be used to implement voltage protection for a plurality of charging channels. For example, multiple wired receiving units may share one load switch, or a wired receiving unit and a wireless receiving unit may share one load switch.

Optionally, the electronic device may further include an overvoltage protection circuit. The overvoltage protection circuit is configured to protect a subsequent circuit from being damaged due to an excessive high voltage during the charging process. One end of the overvoltage protection circuit can be connected to the charging interface, and the other end of the overvoltage protection circuit is connected to the input end of the second voltage conversion circuit or the charging management circuit. The charging interface can be configured to receive the output voltage and output current of the power supply device. The overvoltage protection circuit can be configured to adjust the output voltage and output current of the power supply device, so that the adjusted voltage does not exceed a predetermined voltage.

The embodiments of the present disclosure may include a plurality of overvoltage protection circuits, that is, each of the charging channels has one overvoltage protection circuit provided thereon.

In the embodiments of the present disclosure, multiple overvoltage protection circuits can be implemented by one load switch, and the one load switch can integrate the multiple overvoltage protection circuits on one chip, so that the volume of the electronic device can be reduced.

The electronic device provided by the present disclosure will be described below with reference to specific embodiments, taking the battery including two cells as an example. By using two cells connected in series as the battery, the electronic device only needs to be stepped down to 10V instead of 5V to charge the battery.

As shown in FIG. 5, the electronic device may include two wireless charging units and two wired charging units for charging two cells.

The two wireless charging units may include two wireless receiving circuits and two receiving coils. A first one of the two wireless charging units may include a coil 1, a wireless receiving circuit 1, and a charge pump 1. The wireless receiving circuit 1 has an input end connected to the coil 1, and an output end connected to the charge pump 1. An output end of the charge pump1 is connected to the two cells. The coil 1 can be configured to receive a wireless charging signal transmitted by the transmitting coil (not shown in the figure). The wireless receiving circuit 1 can be configured to convert the wireless charging signal to an output of 20V and 2A. The charge pump 1 has a step-down ratio of 1:2, and can convert the voltage and current of 20V and 2A to a voltage and current of 10V and 4A to charge the two cells. Similarly, a second one of the two wireless charging units may include a coil 2, a wireless receiving circuit 2, and a charge pump 2. The wireless receiving circuit 2 has an input end connected to the coil 2, and an output end connected to the charge pump 2. An output end of the charge pump 2 is connected to the two cells. The coil 2 can be configured to receive the wireless charging signal transmitted by the transmitting coil (not shown in the figure). The wireless receiving circuit 2 can be configured to convert the wireless charging signal to an output of 20V and 2A. The charge pump 2 has a step-down ratio of 1:2, and can convert the voltage and current of 20V and 2A to a voltage and current of 10V and 4A voltage to charge the two cells.

By using two wireless charging units for charging the battery, each of the two wireless charging units can charge the battery with a maximum charging power of 40W, and the two charging units can provide a charging power of 80W for the battery, which can improve the charging speed compared to one wireless charging unit. In addition, when the charging power of the battery is fixed, the heat can also be shared by the two coils for charging, and the heat generated by each coil can be reduced.

The two wired charging units can include two overvoltage protection circuits and two step-down circuits. The two overvoltage protection circuits can protect subsequent circuits (such as the charge pump 1 and the charge pump 2) from being damaged due to excessively high voltage. A first one of the two wired charging units includes an overvoltage protection circuit 1 and a charge pump 1, and a second one of the two wired charging units includes an overvoltage protection circuit 2 and a charge pump 2. The electronic device can receive, from the USB port, a charging voltage and charging current of 20V and 6A outputted by the power supply device. The received charging voltage and charging current of 20V and 6A can be divided into two paths to enter the overvoltage protection circuit 1 and the overvoltage protection circuit 2. The overvoltage protection circuit 1 and the overvoltage protection circuit 2 each receive a voltage and current of 20V and 3A, which becomes a voltage and current of 10V and 6A after passing through the charge pump 1 and the charge pump 2, to charge the two cells.

It can be understood that the output voltage and output current of the above-mentioned power supply device are adjustable, and can be adjusted according to the charging requirement of the battery.

By using two wired charging units for charging the battery, each of the two wired charging units can realize a wired charging power of 40 to 60 W, and the two wired charging units can realize a wired charging power of 80 to 120 W, so that the wired charging speed can be improved.

In addition to the above described two wired charging units, the wired charging units also include an ordinary charging unit which can be compatible with an ordinary adapter, so that the electronic device has good compatibility.

When the adapter is an ordinary adapter, the electronic device can receive, from the USB port, the voltage and current outputted by the adapter. The load switch can protect the subsequent circuits. The charging management circuit can adjust an output voltage and output current of the adapter, so that the adjusted output voltage and output current can meet the charging requirement of the battery.

When the battery includes two cells, a bidirectional charge pump can be connected between the charging management circuit and the battery. When the charging management circuit charges the two cells, the bidirectional charge pump operates in a 1:2 mode, which can double the voltage of 3 to 5 V of the charging management circuit to 6 to 10 V to charge the two cells. When the two cells supply power to the power consumption system, the bidirectional charge pump operates in a 2: 1 mode, which can step down an output voltage of 6 to 10 V of the two cells to 3 to 5 V to supply power to the power consumption system.

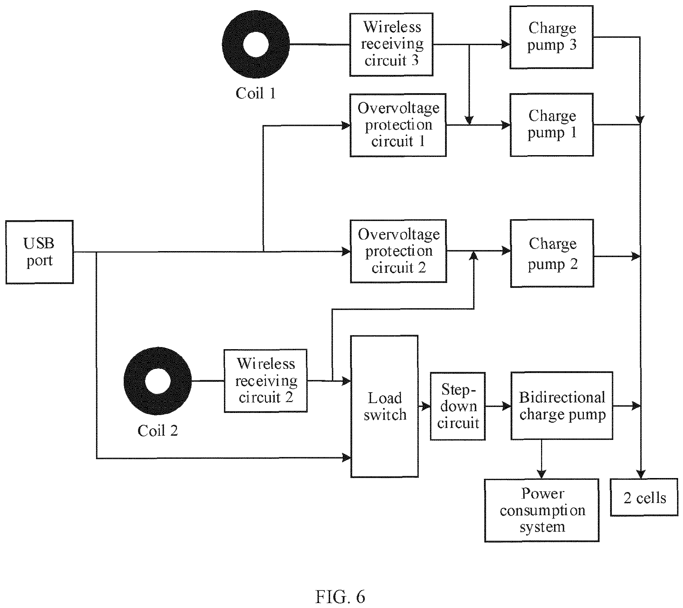

In addition, the embodiments of the present disclosure provide another electronic device, as shown in FIG. 6. Compared with FIG. 5, in the electronic device as shown in FIG. 6, the wireless receiving circuit can be followed by and connected to a plurality of charge pumps connected in parallel to achieve the step-down function. For example, a wireless receiving circuit 1 can be followed by and connected to a charge pump 1 and a charge pump 3 that are connected in parallel, and the charge pump 1 and the charge pump 3 are configured to jointly step down the output voltage of the wireless receiving circuit 1. Since the charge pump 1 and the charge pump 3 have a shunt function, the current flowing through each charge pump will be reduced, thereby reducing the heat generation of the charge pump.

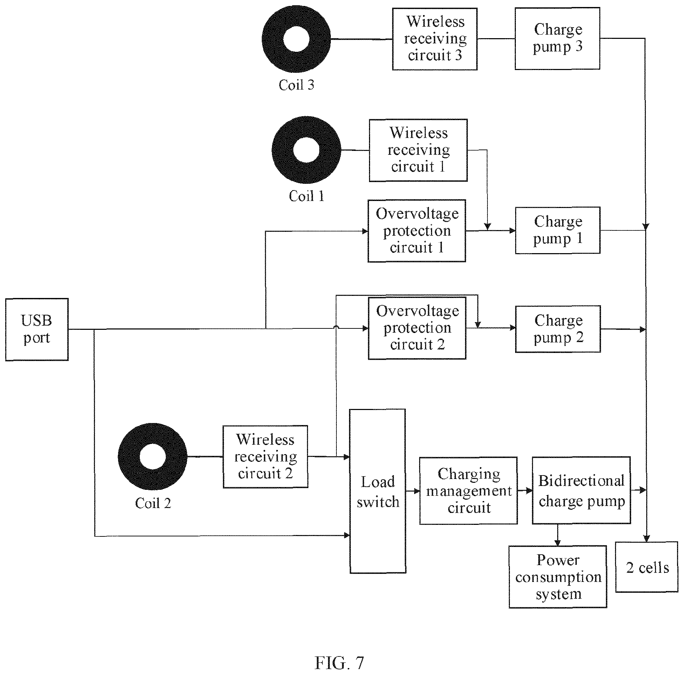

In addition, the embodiments of the present disclosure are not limited to using two wireless charging units and two wired charging units to charge the battery, and can alternatively use more charging units to charge the battery. As shown in FIG. 7, three wireless charging units can be used to charge the battery. The electronic device can further include a coil 3, a wireless receiving circuit 3, and a charge pump 3. The coil 3 can receive the wireless charging signal transmitted by the transmitting coil, the wireless receiving circuit 3 can convert the wireless charging signal into a current and a voltage, and the charge pump 3 can step down the output voltage of the wireless receiving circuit 3 to charge the battery.

By setting the three wireless charging units, the wireless charging power can be further increased to 60 to 90 W, which can further improve the charging speed.

FIG. 7 is only an example, and the electronic device may alternatively include more charging units, which are not repeated here for brevity.

In the embodiments of the present disclosure, the wireless receiving circuits and the step-down circuits can be integrated in one and the same wireless charging chip, which can improve the integration degree of the electronic device and simplify the realization of the electronic device. For example, the function of the wireless charging chip can be extended to support the charging management function.

The plurality of cells mentioned in the embodiments of the present disclosure refers to a plurality of cells connected in series.

The above embodiment may be implemented completely or in part by software, hardware, firmware or any combination thereof. When implemented in software, it can be implemented completely or in part in the form of a computer program product. The computer program product includes one or more computer instructions. When the computer program instructions are loaded and executed on a computer, all or part of the processes or functions described in the embodiments of the present invention are generated. The computer may be a general-purpose computer, a special-purpose computer, a computer network, or other programmable devices. The computer instructions may be stored in a computer-readable storage medium or transmitted from one computer-readable storage medium to another computer-readable storage medium, for example, the computer instructions may be transmitted from one website site, computer, server or data center to another website site, computer, server, or data center in a wired (e.g., a coaxial cable, an optical fiber, a Digital Subscriber Line (DSL)) or wireless (e.g., infrared, wireless, microwave, etc.) manner. The computer-readable storage medium may be any available medium that can be accessed by a computer or a data storage device such as a server and a data center that includes an integration of one or more available mediums. The available mediums may be magnetic mediums (e.g., a floppy disk, a hard disk, a magnetic tape), optical mediums (e.g., Digital Video Disc (DVD)), or semiconductor mediums (e.g., Solid State Disk (SSD)), etc.

Those skilled in the art can realize that the units and algorithm steps of each example described in conjunction with the embodiments disclosed herein can be implemented in an electronic hardware, or a combination of computer software and electronic hardware. Whether these functions are performed in hardware or software depends on the specific application and design constraints of the technical solution. Those skilled in the art may implement the described functions with a different method for each specific application, but such implementations should not be considered beyond the scope of this disclosure.

It should be understood that in the several embodiments provided in this disclosure, the disclosed system, device and method may be implemented in other manners. For example, the device embodiments described above are only illustrative. For example, the division of the units is only a logical function division. In actual implementations, there may be other division methods. For example, multiple units or components may be combined or integrated into another system, or some features can be omitted or not implemented. Further, the shown or discussed mutual coupling or direct coupling or communication connection may be indirect coupling or communication connection via some interfaces, devices or units, and may be in electrical, mechanical or other forms.

Although the terms "first," "second," etc., when used in this disclosure, may be used in this disclosure to describe various devices, these devices should not be limited by these terms. These terms are only used to distinguish one device from another device. For example, without changing the meaning of the description, a first device could be called a second device, and likewise, a second device could be called a first device, so long as each "first device" is consistently renamed and each "second device" is renamed consistently. The first device and the second device are both devices, but may be different devices.

The units described as separate components may be or may not be physically separated. A component shown as a unit may be or may not be a physical unit, that is, it may be located in one place, or may be distributed to multiple network units. Some or all of the units may be selected to achieve the purpose of the solution in the embodiment according to the actual requirement.

In addition, the various functional units in the embodiments of the present disclosure may be integrated into one processing unit, or may exist separately and physically, or two or more units may be integrated into one unit.

The above are only specific embodiments of the present disclosure, and the protection scope of the present disclosure is not limited thereto. Changes or substitutions that can be easily conceived by those skilled in the art within the technical scope disclosed in this disclosure should be covered within the protection scope of the present disclosure. Therefore, the protection scope of the present disclosure should be subject to the protection scope of the claims.

## Claims

1. An electronic device, comprising:
a battery; and
a plurality of wireless charging units configured to charge the battery, wherein each of the plurality of wireless charging units comprises a wireless receiving circuit; and
a plurality of wired charging units configured to charge the battery based on an output voltage and an output current of a power supply device; and
a control unit configured to control at least one of the plurality of wireless charging units and/or at least one of the plurality of wired charging units to charge the battery.

2. The electronic device according to claim 1, wherein each of the plurality of wireless charging units further comprises at least one first voltage conversion circuit connected in parallel or in series; and
the wireless receiving circuit has an output end connected to an input end of each of the at least one first voltage conversion circuit; and
each of the at least one first voltage conversion circuit is configured to perform voltage conversion on an output voltage and an output current of the wireless receiving circuit to obtain a converted voltage and a converted current to be used for charging the battery.

3. The electronic device according to claim 2, wherein the output end of the wireless receiving circuit is connected to input ends of two first voltage conversion circuits, and the two first voltage conversion circuits are configured to jointly perform voltage conversion on the output voltage and the output current of the wireless receiving circuit.

4. The electronic device according to claim 3, wherein the two first voltage conversion circuits have a step-up or step-down function.

5. The electronic device according to claim 3, wherein each of the two first voltage conversion circuits is a charge pump with a fixed conversion ratio.

6. The electronic device according to any one of claims 1 to 5, further comprising:
a plurality of receiving coils, each connected to an input end of one wireless receiving circuit and configured to receive an electromagnetic signal and convert the electromagnetic signal into a voltage and a current to be inputted to the one wireless receiving circuit.

7. The electronic device according to any one of claims 1 to 6, wherein each of the plurality of wired charging units comprises a second voltage conversion circuit configured to perform voltage conversion on the output voltage and the output current of the power supply device to obtain a converted voltage and a converted current to be used for charging the battery.

8. The electronic device according to any one of claims 2, 3, and 7, wherein the battery comprises N cells connected in series; and
a voltage ratio of an output voltage of each first voltage conversion circuit to an input voltage of the first voltage conversion circuit is 1: N, and a voltage ratio of an output voltage of each second voltage conversion circuit to an input voltage of the second voltage conversion circuit is 1: N, where N is an integer greater than or equal to 2.

9. The electronic device according to any one of claims 2 to 8, wherein each first voltage conversion circuit doubles as the second voltage conversion circuit, and the plurality of wired charging units and the plurality of wireless charging units share same voltage conversion circuits.

10. The electronic device according to any one of claims 1 to 9, further comprising:
a charging management circuit configured to adjust the output voltage and the output current of the power supply device in such a manner that the adjusted voltage and the adjusted current match a charging requirement of the battery.

11. The electronic device according to claim 10, further comprising a third voltage conversion circuit having one end connected to the battery and another end connected to a power consumption system of the electronic device,
wherein the battery comprises a plurality of cells connected in series, and
wherein the third voltage conversion circuit is configured to step down output voltages of the plurality of cells during a power supplying process, the stepped-down voltage being used for supplying power to the power consumption system of the electronic device.

12. The electronic device according to claim 11, wherein the one end of the third voltage conversion circuit is connected to an output end of the charging management circuit; and
the third voltage conversion circuit is further configured to step up an output voltage of the charging management circuit in a charging process, the stepped-up voltage being used for charging the plurality of cells.

13. The electronic device according to claim 12, wherein the third voltage conversion circuit is a bidirectional charge pump.

14. The electronic device according to claim 12 or 13, wherein the battery comprises M cells connected in series,
wherein in the charging process, a voltage ratio of an output voltage of the third voltage conversion circuit to an input voltage of the third voltage conversion circuit is M: 1, and
wherein in the power supplying process, a voltage ratio of an output voltage of the third voltage conversion circuit to an input voltage of the third voltage conversion circuit is 1 :M,
wherein M is an integer greater than or equal to 2.

15. The electronic device according to any one of claims 10 to 14, wherein the charging management circuit is a buck circuit.

16. The electronic device according to any one of claims 10 to 14, wherein the charging management circuit is a boost circuit.

17. The electronic device according to any one of claims 10 to 16, further comprising:
a charging interface configured to receive the output voltage and the output current of the power supply device; and
a load switch having one end connected to the charging interface and another end connected to the charging management circuit, the load switch being configured to adjust the output voltage and output current of the power supply device in such a manner that the adjusted voltage does not exceed a predetermined voltage.

18. The electronic device according to claim 17, wherein the load switch is further configured to perform a voltage protection in a wireless charging process.

19. The electronic device according to any one of claims 7 to 14, further comprising:
a charging interface configured to receive the output voltage and the output current of the power supply device; and
at least one overvoltage protection circuit each having one end connected to the charging interface and another end connected to the second voltage conversion circuit, the at least one overvoltage protection circuit being configured to adjust the output voltage and the output current of the power supply device in such a manner that the adjusted voltage does not exceed a predetermined voltage.

20. The electronic device according to claim 19, wherein the at least one overvoltage protection circuit comprises a plurality of overvoltage protection circuits.
